# EUROPÄISCHE PATENTSCHRIFT

(11) **EP 1 790 873 B1**
(45) Veröffentlichungstag und Bekanntmachung des Hinweises auf die Patenterteilung: **13.06.2012**
(21) Anmeldenummer: 06020229.8
(22) Anmeldetag: 27.09.2006
(51) Int. Cl.: F16F 9/02, F16F 9/48

(54) **Verstellelement**
Variable force displacement device
Dispositif de déplacement à force variable

(30) Priorität: 24.11.2005 DE 102005056005
(43) Veröffentlichungstag der Anmeldung: 30.05.2007
(73) Patentinhaber: Stabilus GmbH, 56070 Koblenz (DE)
(72) Erfinder: Born, Frank, 56379 Dienethal (DE); Rennecke, Dirk, 56626 Andernach (DE); Maßmann, Rainer, 53119 Bonn (DE); Schwab, Wilhelm, 56564 Neuwied (DE); Mintgen, Rolf, 56743 Thuer (DE)
(74) Vertreter: Klein, Thomas

(56) Entgegenhaltungen:
- EP-A- 0 253 072
- DE-A1- 2 659 488
- DE-A1- 3 542 700
- DE-B3- 10 316 912

## Beschreibung

Die Erfindung bezieht sich auf ein Verstellelement mit einem unter Druck stehenden Fluid gefüllten zylinderförmigen Gehäuse, welches zwei Abschnitte unterschiedlichen Innendurchmessers aufweist, denen jeweils ein axial beweglich angeordneter Kolben zugeordnet ist, daß die Kolben an den Innendurchmesser ihres jeweiligen Abschnitts angepaßt sind und den jeweiligen Abschnitt des zylinderförmigen Gehäuses in zwei Druckräume unterteilen, mit einer das Gehäuse an einem offenen Ende durchdringenden Kolbenstange, wobei der erste Kolben an einem im Gehäuse befindlichen Ende der Kolbenstange angeordnet ist und jeder der beiden Kolben Mittel zum Dämpfen der Bewegung der Kolbenstange in jeweils eine Richtung besitzt. Das Verstellelement findet Verwendung an schwenkbar gelagerten Teilen, vorzugsweise für Motorhauben oder Heckklappen von Kraftfahrzeugen.

Ein derartiges Verstellelement ist aus der DE 26 59 488 A1 bekannt. Dieses Verstellelement ermöglicht eine Dämpfung der Bewegung der Kolbenstange vor Erreichen der Endstellung in der Ein- und Ausfahrbewegung. Dazu besitzt das Verstellelement ein zylinderförmiges Gehäuse, das mit einem unter Druck stehenden Fluid gefüllt ist. Das zylinderförmige Gehäuse weist an seinem geschlossenen Ende einen größeren Innendurchmesser als an seinem offenen Ende auf. Der am Ende der Kolbenstange angeordnete erste Kolben ist an das Gehäuse im Abschnitt des größeren Innendurchmessers angepaßt, während der zweite Kolben an den Abschnitt des Gehäuses mit kleinerem Innendurchmesser angepaßt ist. Auf diese Weise wird die Bewegung der Kolbenstange solange von dem zweiten Kolben bestimmt, wie er sich im Abschnitt des Gehäuses mit kleinerem Innendurchmesser bewegt. Der verbleibende Kolbenstangenhub wird von dem ersten Kolben beeinflußt. Zum Beeinflussen des Kolbenhubs weisen beide Kolben Mittel zum Dämpfen der Bewegung auf. An jedem Kolben ist zwischen einem Abstützring und einem Bund ein axial beweglicher Kolbenring angeordnet. Der Kolbenring besitzt einen größeren Innendurchmesser als der Bereich des Kolbens, in dem der Kolbenring beweglich gelagert ist. Der so gebildete Ringspalt zwischen Kolbenring und Kolben ermöglicht ein Durchströmen des Fluids zwischen den Druckräumen. Durch richtungsabhängige Anlage des Kolbenrings am Abstützring oder am Bund wird der Ringspalt freigegeben oder gesperrt. Für eine ungedämpfte Bewegung der Kolbenstange weist der erste Kolben zusätzlich eine axial verlaufende Bohrung auf, die von dem axial beweglichen Kolbenring in Abhängigkeit seiner Position geöffnet oder verschlossen wird. Der zweite Kolben besitzt neben dem axial beweglichen Kolbenring eine Arretiervorrichtung. Diese besteht aus Bohrungen im zweiten Kolben, einer die Bohrungen verschließenden Ventilplatte, einer die Ventilplatte vorspannenden Feder sowie einen Anschlag für die Feder an der Kolbenstange.

Beim Ausfahren der Kolbenstange gibt der Kolbenring des ersten Kolbens aufgrund seiner Position einerseits einen Ringquerschnitt zwischen dem ersten Kolben und der Innenwand des Gehäuses und andererseits die Bohrung frei. Das Fluid kann somit durch die freigegebene Bohrung und durch den Ringspalt zwischen Kolben und Gehäuseinnenwand durchströmen. Hierbei ist nahezu keine Dämpfung bemerkbar.

Sobald der zweite Kolben in den Abschnitt des Gehäuses mit kleinerem Innendurchmesser eintritt, durchströmt das Fluid durch den innenliegenden Ringspalt des Kolbenrings und den Abstützring, welcher den Kolbenring hält. Die Arretiervorrichtung ist geschlossen, so daß kein Fluid über die Bohrungen im zweiten Kolben durchströmen kann. Dadurch wird die Ausfahrbewegung gedämpft.

Beim Einfahren der Kolbenstange strömt das Fluid wiederum über den Ringspalt am zweiten Kolben über. Zusätzlich öffnet die Arretiervorrichtung, wodurch ein ungedämpftes Einfahren der Kolbenstange in diesem Abschnitt ermöglicht wird. Sobald der zweite Kolben aus dem Abschnitt des Gehäuses mit kleinerem Innendurchmesser austritt, wird der weitere Bewegungsablauf von dem ersten Kolben bestimmt. Infolge der Einfahrbewegung verschließt der Kolbenring den Ringquerschnitt zwischen dem ersten Kolben und der Innenwand des Gehäuses. Das Fluid kann daher ausschließlich über die axial verlaufende Bohrung im ersten Kolben durchströmen, wodurch eine Dämpfung bei der Einfahrbewegung der Kolbenstange bewirkt wird.

Nachteilig an diesem Verstellelement ist die aufwendige Gestaltung des Kolbens. So bildet der zur Dämpfung der Ausfahrbewegung vorgesehene, zweite Kolben mit der aus mehreren Bauteilen bestehenden Arretiervorrichtung eine komplexe Einheit, um die Dämpfung realisieren zu können. Eine Endlagendämpfung, kurz vor Erreichen der maximalen Ausfahrstellung der Kolbenstange, ist trotz des konstruktiven Aufwands nicht möglich. Ebenso erfordert die Dämpfung der Einfahrbewegung eine zusätzliche Bohrung im ersten Kolben. Weiterhin ist das Verstellelement so ausgebildet, daß die Kolbenstange das Gehäuse an der Seite des Abschnitts mit kleinerem Innendurchmesser durchdringt. Um sowohl die Kolbenstange zu führen als auch die Druckräume im Gehäuse gegen die Atmosphäre abzudichten, muß dieses Ende mit einem Dicht- und Führungspaket verschlossen werden. Herstellungsbedingt ist das andere Ende des Gehäuses ebenfalls offen. Das hat zur Folge, daß das zweite offene Ende des Gehäuses im Endzustand mit einem zusätzlichen Zylinderboden verschlossen werden muß. Der Aufwand zur Herstellung des Gehäuses ist damit ebenfalls sehr hoch.

Aus der EP-A-0253 072 ist eine Gasfeder mit einem durchgehend gleichen Innendurchmesser aufweisenden Zylinder bekannt, der an einem Ende geschlossen ist und durch dessen anderes Ende abgedichtet eine Kolbenstange vom inneren des Zylinders nach außen geführt ist. An dem inneren Ende der Kolbenstange ist ein erster Kolben angeordnet, der den Innenraum des Zylinders in zwei Druckräume unterteilt. An dem ersten Kolben sind Mittel zur Dämpfung der Bewegung in Ausfahrrichtung. Auf der Kolbenstange ist an dem öffnungsseitigen Ende des Zylinders ein ringförmiger zweiter Kolben verschiebbar angeordnet, der über eine Druckfeder an dem öffnungsseitigen Ende des Zylinders abgestützt ist und Mittel zur Dämpfung in Ausfahrrichtung aufweist, die eine Endlagendämpfung bewirken.

Aufgabe der Erfindung ist es, ein Verstellelement der eingangs genannten Art zu schaffen, das eine Dämpfung der Bewegung der Kolbenstange vor Erreichen der Endstellung in der Ein- und Ausfahrbewegung ermöglicht. Das Verstellelement soll dabei möglichst einfach in der Herstellung und Montage sein.

Die Aufgabe wird erfindungsgemäß dadurch gelöst, daß der erste Kolben während der Bewegung in dem Abschnitt, der sich an das geschlossene Ende des Gehäuses anschließt, ohne größeren Widerstand umströmbar ist und daß der zweite Kolben auf der der Kolbenstange abgewandten Seite des ersten Kolbens angeordnet ist und mittels des ersten Kolbens in eine dem offenen Ende abgewandte Richtung bewegbar ist, wobei auf der dem ersten Kolben abgewandten Seite des zweiten Kolbens eine Feder angeordnet ist, die sich mit einem Ende an dem zweiten Kolben und mit ihrem anderen Ende gehäuseseitig abstützt.

Bei eingefahrener Kolbenstange befinden sich beide Kolben in dem Abschnitt, der sich an das geschlossene Ende des Gehäuses anschließt. Die Feder ist zusammengedrückt. Wird die zu bewegende Klappe geöffnet, fährt die Kolbenstange aus. Die Mittel zum Dämpfen der Bewegung am ersten Kolben sind in diesem Abschnitt nicht wirksam, so daß das Fluid während der Bewegung des ersten Kolbens in diesem Abschnitt ohne größeren Widerstand um ihn herumströmt. Die Klappe läßt sich in diesem Schwenkbereich daher ungedämpft bewegen. Die Bewegung des ersten Kolbens ist dabei ohne Auswirkungen auf den zweiten Kolben. Der zweite Kolben wird lediglich durch die als Rückstellelement wirkende Feder in Richtung des ersten Kobens bewegt. Die in zweiten Kolben angeordneten Mittel zur Dämpfung der Bewegung sind in dieser Richtung nicht wirksam, wodurch sich der Kolben mittels der Feder relativ leicht bewegen läßt.

Beim weiteren Verschwenken der Klappe tritt der erste Kolben in den dem offenen Ende zugeordneten Abschnitt des Gehäuses ein, dessen Innendurchmesser an den ersten Kolben angepaßt ist, so daß die Mittel zur Dämpfung während der weiteren Bewegung der Klappe wirksam werden. Die Bewegung der zu verschwenkenden Klappe wird somit bis zum Erreichen der Endlage gedämpft.

Zum Schließen der Klappe fährt die Kolbenstange in das Gehäuse ein. Die Mittel zum Dämpfen der Bewegung des ersten Kolbens sind in dieser Bewegungsrichtung nicht wirksam. Infolge dessen ist die Bewegung der Klappe in diesem Bewegungsabschnitt nahezu ungedämpft. Der zweite Kolben verbleibt während dieser Bewegung des ersten Kolbens in seiner Position.

Beim weiteren Einfahren der Kolbenstange läuft der erste Kolben auf den zweiten Kolben auf und bewegt ihn in Einschubrichtung. Aufgrund der in dieser Bewegungsrichtung wirkenden Mittel zum Dämpfen der Bewegung am zweiten Kolben, wird mit dem Bewegen des zweiten Kolbens die Dämpfung eingeleitet, so daß die Klappe bis zum Erreichen ihrer Endlage gedämpft verschwenkt wird.

Aufgrund der fliegenden Anordnung des zweiten Kolbens im Gehäuse ist der zweite Kolben nicht mit der Kolbenstange verbunden. Der zweite Kolben weist daher einen wesentlich einfacheren Aufbau auf. Zudem ist die Montage des Kolbens ebenso wie die Rückstellung des zweiten Kolbens mittels einer Feder besonders einfach und erfordert keinen wesentlich größeren Aufwand.

Die Einstellung der Rückstellkraft und des Rückstellweges des zweiten Kolbens läßt sich in weiten Grenzen variieren und somit an die jeweils vorgegebenen Einsatzbedingungen durch die Dimensionierung einer als Schraubendruckfeder ausgebildeten Feder anpassen.

Um die gute Angriffsfläche für die Feder bereitzustellen und somit ein Verkanten des zweiten Kolbens zu verhindern, ist es vorteilhaft, wenn der zweite Kolben auf seiner der Feder zugewandten Seite eine Aufnahme für die Feder besitzt. Die Aufnahme kann entweder topfförmig sein, so daß die Feder von der Aufnahme umschlossen wird, oder die Aufnahme kann als Zapfen ausgebildet sein, der derart in die Feder eingreift, daß zumindest zwei Windungen den Zapfen umgeben.

Eine verbesserte Führung der Feder im Gehäuse läßt sich mit einfachen Mitteln dadurch realisieren, daß das dem Kolben abgewandte Ende der Feder ebenfalls in einer Aufnahme angeordnet ist, wobei sich die Aufnahme am Ende des Gehäuses befindet. Eine derartige Aufnahme ist besonders dann vorteilhaft, wenn der Durchmesser der Feder deutlich geringer als der Innendurchmesser des Gehäuses ist. Sofern die Feder eine Druckfeder ist, kann auf eine zusätzliche Befestigung der Aufnahme im Gehäuse verzichtet werden, da die Feder die Aufnahme gegen das Gehäuse vorspannt.

Eine besonders einfache Ausgestaltung der Mittel zum Dämpfen der Bewegung wird dadurch erreicht, daß an den beiden Kolben zwischen zwei axialen Begrenzungen ein axial beweglich angeordneter Kolbenring angeordnet ist. Die beiden axialen Begrenzungen können ein Bund am Kolben oder ein Haltering und ein mit Ausnehmungen ausgebildeter Abstützring sein. Der Kolbenring besitzt einen größeren Innendurchmesser als der Bereich des Kolbens, so daß der sich dadurch ausbildende Ringspalt ein Durchströmen des Fluids erlaubt. Somit kann bei Anlage des Kolbenrings am Abstützring Fluid über die Ausnehmungen und den Ringspalt durchströmen. Bei Anlage des Kolbenrings am Bund oder Haltering ist der Ringspalt versperrt und das Fluid kann lediglich über eine Überströmverbindung zwischen den Druckräumen überströmen, was zu einer Dämpfung der Bewegung führt.

Die Überströmverbindung gestaltet sich besonders einfach, wenn sie eine als eine an der Innenwand des zylinderförmigen Gehäuses ausgebildete Nut ausgebildete Überströmverbindung aufweist. Mittels einer gezielten Nutgestaltung lassen sich verschiedene Bewegungsabläufe der zu verschwenkende Klappe realisieren. Durch die als Nuten ausgebildeten Überströmverbindungen wird ein Überströmen des Fluids um die Außenseiten der beiden Kolbenringe ermöglicht. Zusätzlich vorzusehende Bohrungen im Kolben können daher ebenso entfallen wie aufwendige Mechanismen zum Schließen oder Öffnen der Bohrungen in Abhängigkeit der Bewegung der Kolbenstange. Das Verstellelement benötigt weniger Bauteile, wodurch es leichter herzustellen, einfacher in der Montage und somit kostengünstiger ist.

Die Auslegung des Nutquerschnitts, insbesondere der Nuttiefe, gestaltet sich in Abhängigkeit vom Einsatzort und den gewünschten Bewegungsabläufen für die Verstellung. Ein größerer erforderlicher Nutquerschnitt kann dabei zu einer großen Nuttiefe führen, die wiederum ein dickwandiges zylinderförmiges Gehäuse erfordert. Durch die Anordnung mehrerer am Umfang der Innenwand des zylinderförmigen Gehäuses angeordneter Nuten mit geringen Nuttiefen, läßt sich eine einzelne Nut mit großer Nuttiefe vermeiden. Die Summe der Querschnitte der einzelnen Nuten ergibt den wirksamen Gesamtquerschnitt für die Überströmverbindung. Auf diese Weise wird ein dickwandiges Gehäuse vermieden.

Die Festigkeit des zylinderförmigen Gehäuses wird am wenigsten beeinflußt, wenn die Nuten symmetrisch am Umfang der Innenwand angeordnet sind.

In Abhängigkeit der für den speziellen Anwendungsfall vorgegebenen Randbedingungen werden die Kolbenringe unterschiedlich belastet. Eine Anpassung der Kolbenringe an die verschiedenen Belastungen wird bereits mit einer geeigneten Wahl des Querschnitts der Kolbenringe erreicht. Neben runden und ovalen Querschnitten, haben sich rechteckförmige Querschnitte, insbesondere bei Materialen höherer Festigkeit, als vorteilhaft herausgestellt.

Die Mittel zum Dämpfen der Bewegung des zweiten Kolbens können einen Dichtring mit einer elastisch radial nach außen und der Feder zugewandten radial umlaufenden Dichtlippe aufweisen, wobei die Überströmverbindung des zweiten Kolbens wenigstens eine Nut mit gegenüber der Nutbreite geringer Nuttiefe aufweist, in die die Dichtlippe hineinverformbar ist und wobei die Überströmverbindung des zweiten Kolbens weiterhin mindestens eine weitere Nut aufweist, in die die Dichtlippe nicht hineinverformbar ist. Durch die schräge Anordnung erzeugt das auf die Dichtlippe auftreffende Fluid eine nach radial außen wirkende Kraftkomponente, die den äußeren Rand der Dichtlippe nach radial außen drückt, wodurch die Dichtlippe in die eine Nut hineinverformt wird. Gleichzeitig wird in der entgegengesetzten Richtung das Überströmen des Fluids erleichtert, die das Fluid nunmehr eine nach radial innen gerichtete Kraftkomponente in der Dichtlippe erzeugt, die die Dichtlippe von der Gehäuseinnenwand wegbewegt, so daß sich der Überströmquerschnitt vergrößert.

Der Nutquerschnitt der weiteren Nut verhindert, daß sich die Dichtlippe in die Nut hineinverformen kann und den Querschnitt verschließt. Der Querschnitt dieser Nut bestimmt somit den Grad der Dämpfung. Beim Ausfahren der Kolbenstange wird die Dichtlippe infolge der nun nach radial innen wirkenden Kraftkomponente nach innen verformt, so daß der Querschnitt der anderen Nuten freigegeben wird, was ein noch leichteres Überströmen des Fluids um den zweiten Kolben erlaubt.

Die weitere Nut kann eine Nuttiefe aufweisen, die etwa der Nutbreite entspricht.

Der Abschnitt des Gehäuses, in dem der zweite Kolben verschiebbar angeordnet ist, kann einen größeren Innendurchmesser aufweisen, als der Abschnitt, in dem der erste Kolben verschiebbar angeordnet ist.

Dadurch kann der zweite Kolben gegen ein ungewolltes Ausfahren aus dem ihm zugeordneten Abschnitt gesichert werden. Aufgrund des sich verringernden Innendurchmessers im Übergang von dem Abschnitt des zweiten Kolbens zu dem Abschnitt des ersten Kolbens wird der zweite Kolben sicher in diesem Abschnitt gehalten.

Die Montage des zweiten Kolbens in das Gehäuse durch das offene Ende wird auf einfache Weise dadurch ermöglicht, wenn der zweite Kolben auf seiner dem ersten Kolben zugewandten Seite radial nach außen und dem ersten Kolben zugewandte Zungen aufweist, welche mit Abstand zueinander angeordnet sind und sich radial nach außen weiter als der Innendurchmesser des Abschnitts des ersten Kolbens erstrecken, die in einer weiteren Ausgestaltung am zweiten Kolben auf seiner dem ersten Kolben zugewandten Seite schräg nach radial außen und dem ersten Kolben zugewandt und mit radialem Abstand zueinander angeordnet sind. Bei der Montage werden die Zungen radial nach innen gedrückt, so daß sich der zweite Kolben durch das offene Ende und den Abschnitt für den ersten Kolben in den Abschnitt für den zweiten Kolben einschieben läßt. Sobald der zweite Kolben den ihm zugeordneten Abschnitt erreicht, nehmen die Zungen ihre Ausgangslage ein. Die Zungen wirken nunmehr als Sicherung gegen ein ungewolltes Ausfahren, da sie bei einer Bewegung des zweiten Kolbens in Richtung des ersten Kolbens an den Übergang mit sich verkleinernden Innendurchmesser anstoßen und ein weiteres Ausfahren verhindern. Somit sind beide Kolben über ein offenes Ende in das Gehäuse montierbar, wobei das offene Ende auch an dem Abschnitt mit kleinerem Innendurchmesser angeordnet sein kann, ohne daß ein zweiter Verschluß für das zylinderförmige Gehäuse notwendig ist.

In einer anderen Ausgestaltung wird ein ungewolltes Ausfahren des zweiten Kolbens aus seinem Abschnitt dadurch verhindert, daß der Kolben mit der Schraubendruckfeder verbunden ist. Die Verbindung ist vorteilhafterweise als Preßpassung ausgeführt. Die Länge der Schraubendruckfeder ist dabei so gestaltet, daß der zweite Kolben im entspannten Zustand der Feder nahe dem Übergang zwischen den beiden Abschnitten befindet. In dieser Position wirken auf den zweiten Kolben keine Federkräfte. Das dem Gehäuse zugewandte Ende der Feder ist in geeigneter Weise mit dem geschlossenen Ende des Gehäuses oder der Aufnahme für die Feder befestigt.

Bei einer Bewegung des zweiten Kolbens in den Abschnitt des ersten Kolbens wirkt die Feder als Zugfeder, wodurch eine Rückstellung des zweiten Kolbens bewirkt werden würde.

Bei einer Verwendung des Verstellelementes zum Verschwenken von Klappen, insbesondere Motorhauben oder Heckklappen von Kraftfahrzeugen, ist es sinnvoll, die Bewegung der Klappen kurz vor Erreichen der Endlage noch weiter zu dämpfen. Eine derartige Endlagendämpfung wird mit einem Verstellelement erreicht, dessen Nut in dem dem offenen Ende des Gehäuses zugewandten Abschnitt einen Bereich mit sich verringerndem Querschnitt aufweist, der dem Bereich der Endlage des ersten Kolbens bei ausgefahrener Kolbenstange entspricht. Aufgrund des sich verringernden Nutquerschnitts wird die Menge des Fluid, welches überströmen kann, vermindert, wodurch sich die Geschwindigkeit der ausfahrenden Kolbenstange verlangsamt. Infolge dieser Endlagendämpfung werden die Anschlagelemente des Verstellelementes weniger beansprucht.

Zwei Ausführungsbeispiele der Erfindung sind in der Zeichnung dargestellt und werden im Folgenden näher beschrieben. Es zeigen
- Figur 1:: eine schematische Darstellung einer Motorhaube eines Kraftfahrzeugs mit einem Verstellelement,
- Figur 2:: einen Schnitt durch das erfindungsgemäße Verstellelement aus Figur 1,
- Figur 3:: einen Schnitt eines zweiten Ausführungsbeispiels des Verstellelements und
- Figur 4:: das Gehäuse des Verstellelements aus Figur 3 in einem Schnitt A-A .

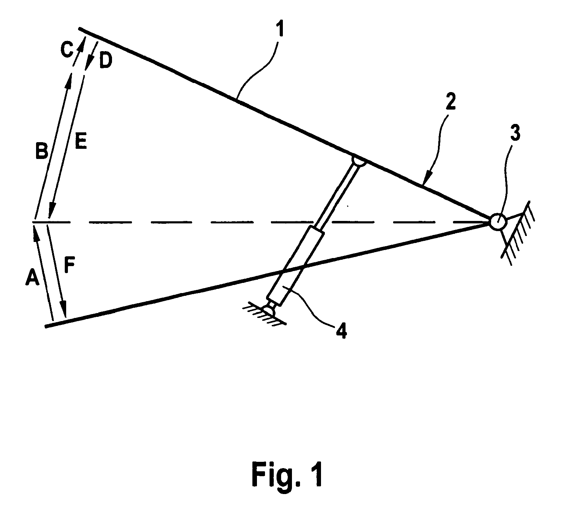

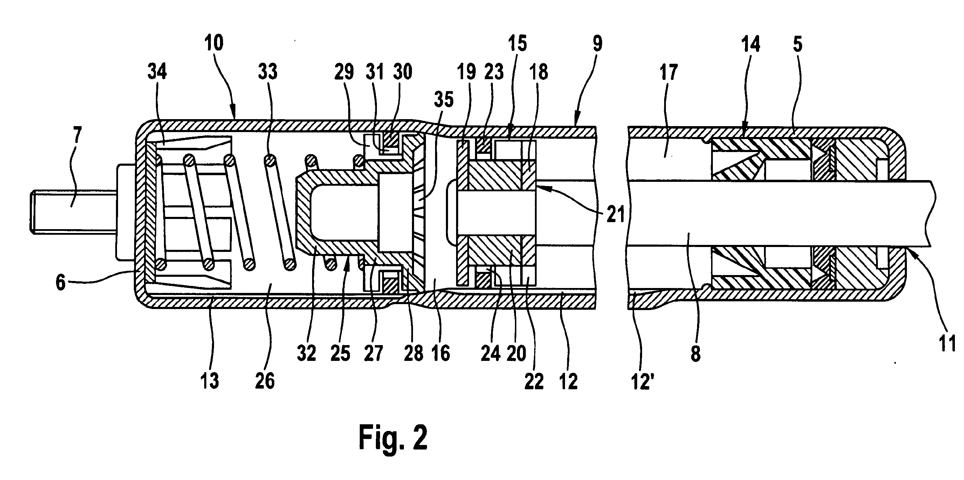

Figur 1 zeigt schematisch den vorderen Bereich eines Kraftfahrzeugs mit einer Motorhaube 1, die an ihrem hinteren Endbereich 2 um eine quer zur Längsachse des Kraftfahrzeugs sich erstreckende Schwenkachse 3 schwenkbar angeordnet ist. Zum Bewegen der Motorhaube 1 ist ein als Gasfeder 4 ausgebildetes Verstellelement angeordnet. Die einzelnen Bewegungsabläufe der Motorhaube 1 während des Öffnens A-C und des Schließens D-F werden durch die Gestaltung der Gasfeder 4 bestimmt und in Figur 2 näher erläutert.

Das in Figur 2 dargestellte Verstellelement besitzt ein einteilig ausgebildetes, zylinderförmiges Gehäuse 5, das mit einem unter Druck stehenden Gas gefüllt ist. Das zylinderförmige Gehäuse 5, welches an einem geschlossenen Ende 6 eine Aufnahme 7 besitzt, mit der die Verstellvorrichtung an der nicht dargestellten Karosserie des Kraftfahrzeugs angeschlagen ist. Das nicht dargestellt andere Ende der Kolbenstange 8 ist an der Motorhaube befestigt.

Das zylinderförmige Gehäuse 5 besitzt zwei Abschnitte 9, 10 mit unterschiedlichen Innendurchmessern, wobei der Abschnitt 10 mit größerem Innendurchmesser am geschlossenen Ende 6 und der Abschnitt 9 mit kleinerem Innendurchmesser am offenen Ende 11 angeordnet ist. Beide Abschnitte 9, 10 besitzen jeweils eine an der Innenwand des zylinderförmigen Gehäuses 1 axial verlaufende Nut 12, 13.

In dem zylinderförmigen Gehäuse 5 ist die Kolbenstange 8, die das Gehäuse 5 an dem offenen Ende 11 durchdringt, axial beweglich angeordnet. Durch ein am offenen Ende 11 angeordnetes Dicht- und Führungssystem 14 wird die Kolbenstange 8 geführt und gegenüber dem zylinderförmigen Gehäuse 1 abgedichtet.

Auf der Kolbenstange 8 ist ein erster Kolben 15 mit an den Abschnitt 9 angepaßten Durchmessern angeordnet. Der erste Kolben 15 unterteilt das Gehäuse 1 in zwei Druckräume 16, 17.

Der erste Kolben 15 besteht aus einem Abstützring 18 und einem Haltering 19, zwischen denen ein zylinderförmiger Kolbenkörper 20 angeordnet ist, wobei der Haltering 19 auch als Bund einteilig mit dem Kolbenkörper 20 ausgebildet sein kann. Der Abstützring 18 stützt sich mit seiner dem offenen Ende 7 des Gehäuses 1 zugewandten Seite an einem Bund 21 der Kolbenstange 8 ab. Der Abstützring 18 besitzt mehrere am Umfang angeordnete Ausnehmungen 22, über die das Gas überströmen kann. Auf dem zylinderförmigen Kolbenkörper 20 ist ein Kolbenring 23 mit rechteckigem Querschnitt angeordnet, der zwischen dem Abstützring 18 und dem Haltering 19 axial bewegbar ist. Die axiale Beweglichkeit des Kolbenrings 23 beruht auf seinem gegenüber dem Kolbenkörper 20 größeren Innendurchmesser und dem sich dadurch ausbildenden Ringspalt 24.

Der Außendurchmesser des Kolbenrings 23, welcher größer als der Außendurchmesser des Halterings 19 und des Abstützrings 18 ist, entspricht dem Innendurchmesser des Abschnitts 9 mit kleinerem Innendurchmesser, so daß die radial umlaufende Außenfläche des Kolbenrings 23 dicht an der Innenwand des Abschnitts 9 entlang gleiten kann.

In dem Abschnitt 10 des Gehäuses 5 ist ein zweiter Kolben 25 angeordnet, der keine feste Verbindung zur Kolbenstange 8 aufweist und den Abschnitt 10 in zwei Druckräume 16, 26 unterteilt. Der zweite Kolben 25 besteht aus einem zylindrischen Kolbenkörper 27 mit einem Bund 28. Auf dem Kolbenkörper 27 ist ein Abstützring 29 mit mehreren am Umfang angeordneten Ausnehmungen aufgepreßt. Zwischen dem Abstützring 29 und dem Bund 28 ist ein axial bewegbarer Kolbenring 30 mit rechteckigem Querschnitt und mit einem größeren Innendurchmesser angeordnet, so daß sich ein Ringspalt 31 ausbildet. Der Außendurchmesser des Kolbenrings 30 entspricht dem Innendurchmesser des Abschnitts 10, so daß die radial umlaufende Außenfläche des Kolbenrings 30 dicht an der Innenwand des Abschnitts 10 entlang gleiten kann.

Auf seiner dem geschlossenen Ende 6 zugewandten Seite besitzt der zweite Kolben 25 eine als Zapfen 32 ausgebildete Aufnahme für eine Schraubendruckfeder 33. Das andere Ende der Schraubendruckfeder 33 ist in einer gehäuseseitig angeordneten Aufnahme 34 aufgenommen.

Bei geschlossener Motorhaube 1 befinden sich beide Kolben 15, 25 im Abschnitt 10.

Beim Öffnen der Motorhaube 1 aus einer nach unten geneigten Position wird die Kolbenstange 8 in Richtung des offenen Endes 11 des zylinderförmigen Gehäuses 5 bewegt. Bei dieser Bewegung wird der axial bewegliche Kolbenring 23 des ersten Kolbens 15 gegen den Haltering 19 bewegt. Der Ringspalt 24 wird dadurch versperrt. Aufgrund seines kleineren Außendurchmessers gegenüber dem Abschnitt 10 kann genügend Gas über den ersten Kolben 15 überströmen, so daß die Kolbenstange 8 während des Bewegungsablaufs A nahezu ungedämpft ausfahren kann.

Unabhängig von der Bewegung des ersten Kolbens 15 wird der zweite Kolben 25 von der bis auf Blocklänge zusammengedrückten und sich nun entspannenden Schraubendruckfeder 33 in Ausfahrrichtung bewegt. Der Kolbenring 30 wird vom Gas entgegen der Bewegungsrichtung bewegt, bis er am Abstützring 29 zur Anlage kommt. Das Gas kann über den Ringspalt 31 und die Ausnehmungen im Abstützring 29 und die Nut 13 aus dem Druckraum 16 in den Druckraum 26 überströmen. Dadurch läßt sich der zweite Kolben 25 ungedämpft in Richtung des Abschnitts 9 bewegen, bis am Bund 28 angeformte Zungen 35 am Übergang zum Abschnitt 9 aufgrund des sich verringernden Innendurchmessers des Gehäuses 5 anstoßen. Die Zungen 35 sind mit Abstand zueinander angeordnet, so daß sie keinen nennenswerten Strömungswiderstand bilden.

Beim weiteren Ausfahren der Kolbenstange 8 im Bewegungsablauf B liegt der Kolbenring 23 des ersten Kolbens 15 am Haltering 19 an und versperrt damit den Ringspalt 24 zwischen dem Kolbenring 23 und dem Kolbenkörper 20. Das Gas kann somit ausschließlich über die Nut 12 und somit über den Kolbenring 23 vom Druckraum 17 in den Druckraum 16 überströmen. Diese Dämpfung entspricht der üblichen Ausschubdämpfung beim Verschwenken der Motorhaube 1 in die Endlage.

Kurz vor Erreichen der Endlage tritt der erste Kolben 15 in den Bereich 12' ein, was dem Bewegungsablauf C aus Figur 1 entspricht. Aufgrund des sich verringernden Querschnitts der Nut 12 kann weniger Gas überströmen, wodurch die Bewegung des ersten Kolbens 15 und damit der Kolbenstange 8 weiter gedämpft wird, bis die Endlage erreicht ist.

Zum Schließen der Motorhaube 1 verfährt die Kolbenstange 8 in die entgegengesetzte Richtung. In dieser Bewegung bewegt sich der Kolbenring 23 des ersten Kolbens 15 gegen den Abstützring 18. Damit ist der Ringspalt 24 zwischen Kolbenring 23 und dem Kolbenkörper 20 freigegeben, so daß das Gas aus dem Druckraum 16 in den Druckraum 17 über die Nut 12, den Ringspalt 24 und die Ausnehmungen 22 überströmen kann. Somit ist keine Einschubdämpfung in den Bewegungsabläufen D und E spürbar.

Sobald die Motorhaube 1 durch die horizontale Lage verschwenkt wird, und damit den Gleichgewichtspunkt durchschreitet, trifft der erste Kolben 15 im Bewegungsablauf F auf den zweiten Kolben 25 und verfährt ihn in Richtung des geschlossenen Endes 6. Das aus dem Druckraum 26 in den Druckraum 16 überströmende Gas verschiebt den Kolbenring 30 des zweiten Kolbens 25 gegen den Bund 28, so daß der Ringspalt 31 versperrt wird. Das Gas kann daher ausschließlich über die Nut 13 überströmen, wodurch die Dämpfung der Bewegung der Kolbenstange 8 und damit der Motorhaube 1 auf eine Geschwindigkeit von 1,2 m/s bis 1,5 m/s erreicht wird. Mit dieser Geschwindigkeit ist ein sicheres Einrasten der Motorhaube 1 in einem Motorhaubenschloß gewährleistet.

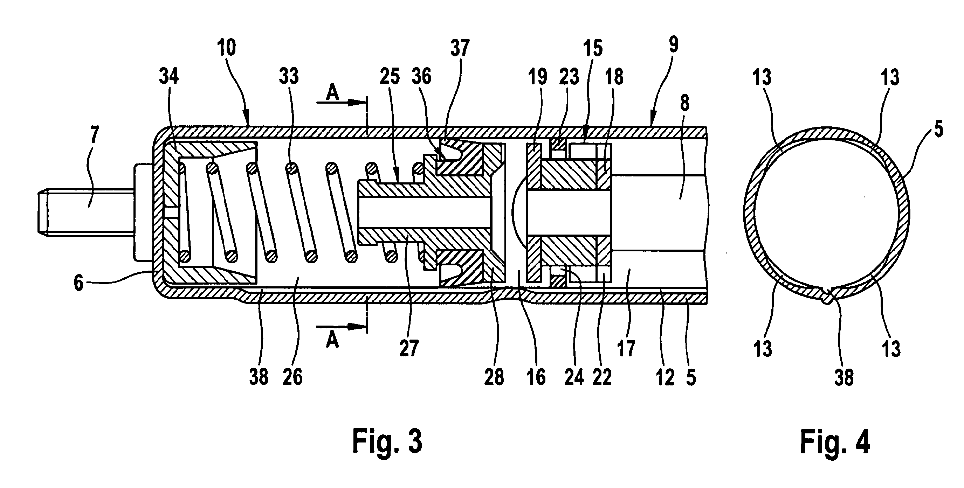

Figur 3 zeigt ein Verstellelement, das sich im Aufbau von dem Verstellelement in Figur 2 im zweiten Kolben 25 unterscheidet. Anstelle eines Kolbenrings und eines Abstützrings mit Ausnehmungen besitzt der Kolben 25 einen Dichtring 36 mit einer radial umlaufenden und schräg nach radial außen und in Richtung der Schraubendruckfeder 33 weisenden Dichtlippe 37. Deren Wirkungsweise wird in Verbindung mit Figur 4 erläutert.

Das Gehäuse 5 in Figur 4 besitzt vier gleichmäßig am Umfang angeordnete Nuten 13 und eine zusätzliche Nut 38. Während die Nuten 13 eine gegenüber der Nutbreite geringe Nuttiefe aufweisen, entspricht die Nuttiefe der Nut 38 in etwa deren Nutbreite. Aufgrund ihrer Elastizität ist die Dichtlippe in der Lage, die Nutquerschnitte 13 vollständig abzudichten. Lediglich der Querschnitt der zusätzlichen Nut 38 kann aufgrund der Querschnittsgestaltung von der Dichtlippe 37 nicht verschlossen werden. Wird der zweite Kolben 25 von der Schraubendruckfeder 33 in Richtung Abschnitt 9 bewegt, erzeugt das aus dem Druckraum 16 in den Druckraum 26 überströmende Gas eine auf die Dichtlippe 37 nach radial innen wirkende Kraftkomponente, wodurch die Dichtlippe 37 die Querschnitte der Nuten 13 freigibt und das Gas nahezu ungehindert überströmen kann.

Bei einer Bewegung in die entgegengesetzte Richtung erzeugt das aus dem Druckraum 26 in den Druckraum 16 überströmende Gas nunmehr eine nach radial außen wirkende Kraftkomponente auf die Dichtlippe 37. Dadurch wird die Dichtlippe in die Nuten 13 gepreßt, so daß lediglich der Querschnitt der Nut 38 frei bleibt. Infolge des wesentlich geringeren Querschnitts kann das Gas wesentlich langsamer überströmen, wodurch die Bewegung des zweiten Kolbens 25 gedämpft wird.

### Bezugszeichenliste

- 1: Motorhaube
- 2: hinterer Endbereich
- 3: Schwenkachse
- 4: Gasfeder
- 5: Zylinderförmiges Gehäuse
- 6: geschlossenes Ende
- 7: Aufnahme
- 8: Kolbenstange
- 9: Abschnitt größeren Durchmessers
- 10: Abschnitt kleineren Durchmessers
- 11: offenes Ende
- 12: Nut
- 12': Nutbereich
- 13: Nut
- 14: Dicht- und Führungssystem
- 30: Kolbenring
- 31: Ringspalt
- 32: Zapfen
- 33: Schraubendruckfeder
- 34: Aufnahme
- 15: erster Kolben
- 16: Druckraum
- 17: Druckraum
- 18: Abstützring
- 19: Haltering
- 20: Kolbenkörper
- 21: Bund
- 22: Ausnehmung
- 23: Kolbenring
- 24: Ringspalt
- 25: zweiter Kolben
- 26: Druckraum
- 27: Kolbenkörper
- 28: Bund
- 29: Abstützring
- 35: Zungen
- 36: Dichtring
- 37: Dichtlippe
- 38: Nut

## Patentansprüche

1. Verstellelement mit einem unter einem Druck stehenden Fluid gefüllten zylinderförmigen Gehäuse, welches zwei Abschnitte aufweist, denen jeweils ein axial beweglich angeordneter Kolben zugeordnet ist, daß die Kolben an den Innendurchmesser ihres jeweiligen Abschnitts angepaßt sind und den jeweiligen Abschnitt des zylinderförmigen Gehäuses in zwei Druckräume unterteilen, mit einer das Gehäuse an einem offenen Ende durchdringenden Kolbenstange, wobei der erste Kolben an einem im Gehäuse befindlichen Ende der Kolbenstange angeordnet ist und jeder der beiden Kolben Mittel zum Dämpfen der Bewegung der Kolbenstange in jeweils eine Richtung besitzt, **dadurch gekennzeichnet, daß** der erste Kolben (15) während der Bewegung in dem Abschnitt (10), der sich an das geschlossene Ende (6) des Gehäuses (5) anschließt, ohne größeren Widerstand umströmbar ist und daß der zweite Kolben (25) auf der der Kolbenstange (8) abgewandten Seite des ersten Kolbens (15) angeordnet ist und mittels des ersten Kolbens (15) in eine dem offenen Ende (11) abgewandte Richtung bewegbar ist, wobei auf der dem ersten Kolben (15) abgewandten Seite des zweiten Kolbens (25) eine Feder (33) angeordnet ist, die sich mit einem Ende an dem zweiten Kolben (25) und mit ihrem anderen Ende gehäuseseitig (6, 34) abstützt.

2. Verstellelement nach Anspruch 1, **dadurch gekennzeichnet, daß** die Feder eine Schraubendruckfeder (33) ist.

3. Verstellelement nach Anspruch 1 und 2, **dadurch gekennzeichnet, daß** der zweite Kolben (25) auf seiner der Feder (33) zugewandten Seite eine Aufnahme (32) für die Feder (33) besitzt.

4. Verstellelement nach einem der vorhergehenden Ansprüche, **dadurch gekennzeichnet, daß** die Feder (33) auf ihrer dem zweiten Kolben (25) abgewandten Seite in einer Aufnahme (34) angeordnet ist.

5. Verstellelement nach einem der vorhergehenden Ansprüche, **dadurch gekennzeichnet, daß** die Mittel zum Dämpfen der Bewegung axial beweglich angeordnete Kolbenringe (23, 30) aufweisen.

6. Verstellelement nach Anspruch 5, **dadurch gekennzeichnet, daß** die Kolbenringe (23, 30) einen rechteckigen, runden oder ovalen Querschnitt besitzen.

7. Verstellelement nach einem der vorhergehenden Ansprüche, **dadurch gekennzeichnet, daß** die Mittel zum Dämpfen der Bewegung eine als eine an der Innenwand des zylinderförmigen Gehäuses (5) ausgebildete Nut (12, 13, 38) ausgebildete Überströmverbindung aufweisen.

8. Verstellelement nach Anspruch 7, **dadurch gekennzeichnet, daß** die Nut durch mehrere am Umfang der Innenwand des zylinderförmigen Gehäuses (5) verteilt angeordnete Nuten (12, 13) gebildet ist.

9. Verstellelement nach Anspruch 8, **dadurch gekennzeichnet, daß** die Nuten (12, 13) symmetrisch am Umfang der Innenwand des Gehäuses (5) angeordnet sind.

10. Verstellelement nach einem der vorhergehenden Ansprüche, **dadurch gekennzeichnet, daß** die Mittel zum Dämpfen der Bewegung des zweiten Kolbens (25) einen Dichtring (36) mit einer elastisch radial nach außen und der Feder (33) zugewandten radial umlaufenden Dichtlippe (37) aufweisen, wobei die Überströmverbindung des zweiten Kolbens (25) wenigstens eine Nut (13) mit gegenüber der Nutbreite geringer Nuttiefe aufweist, in die die Dichtlippe (37) hineinverformbar ist und wobei die Überströmverbindung des zweiten Kolbens (25) weiterhin mindestens eine weitere Nut (38) aufweist, in die die Dichtlippe (37) nicht hineinverformbar ist.

11. Verstellelement nach Anspruch 10, **dadurch gekennzeichnet, daß** die weitere Nut (38) eine Nuttiefe aufweist, die etwa der Nutbreite entspricht.

12. Verstellelement nach einem der vorhergehenden Ansprüche, **dadurch gekennzeichnet, daß** der Abschnitt (10) des Gehäuses (5), in dem der zweite Kolben (25) verschiebbar angeordnet ist, einen größeren Innendurchmesser aufweist, als der Abschnitt (9), in dem der erste Kolben (15) verschiebbar angeordnet ist.

13. Verstellelement nach Anspruch 12, **dadurch gekennzeichnet, daß** der zweite Kolben (25) auf seiner dem ersten Kolben (15) zugewandten Seite radial nach außen und dem ersten Kolben (15) zugewandte Zungen (35) aufweist, welche mit Abstand zueinander angeordnet sind und sich radial nach außen weiter als der Innendurchmesser des Abschnitts (9) des ersten Kolbens (15) erstrecken.

14. Verstellelement nach Anspruch 7, **dadurch gekennzeichnet, daß** in dem Abschnitt (9), der dem offenen Ende (11) des Gehäuses (5) zugewandt ist, die Nut (12) einen Bereich (12') mit sich verringerndem Querschnitt aufweist, und daß der Bereich (12') der Endlage des ersten Kolbens (15) bei ausgefahrener Kolbenstange (8) entspricht.

## Claims

1. Displacement element having a cylindrical housing filled with a fluid under pressure and exhibiting two sections, to which a piston so arranged as to be capable of axial displacement is allocated in each case, each of the pistons being adapted to the respective internal diameter of its section and dividing the respective section of the cylindrical housing into two pressure chambers, having a piston rod penetrating the housing at an open end, which first piston is arranged at one end of the piston rod present in the housing, and each of the two pistons possessing means for damping the movement of the piston rod respectively in one direction, **characterized in that** flow can pass around the first piston (15) without any significant resistance during the movement of said first piston in the section (10) which adjoins the closed end (6) of the housing (5), and **in that** the second piston (25) is arranged on the side of the first piston (15) facing away from the piston rod (8) and is capable of displacement by means of the first piston (15) in a direction facing away from the open end (11), in conjunction with which, arranged on the side of the second piston (25) facing away from the first piston (15), is a spring (33) which is supported with its one end on the second piston (25) and with its other end on the housing (6, 34).

2. Displacement element according to Claim 1, **characterized in that** the spring is a helical pressure spring (33).

3. Displacement element according to Claims 1 and 2, **characterized in that** the second piston (25) possesses, on its side facing towards the spring (33), a spigot (32) for the spring (33).

4. Displacement element according to one of the foregoing claims, **characterized in that** the spring (33) is arranged in a seat (34) on its side facing towards the second piston (25).

5. Displacement element according to one of the foregoing claims, **characterized in that** the means for damping the movement exhibit piston rings (23, 30) so arranged as to be capable of axial displacement.

6. Displacement element according to Claim 5, **characterized in that** the piston rings (23, 30) possess a rectangular, round or oval cross section.

7. Displacement element according to one of the foregoing claims, **characterized in that** the means for damping the movement exhibit an overflow connection embodied as a groove (12, 13, 38) executed on the internal wall of the cylindrical housing (5).

8. Displacement element according to Claim 7, **characterized in that** the groove is formed by a plurality of grooves (12, 13) arranged on the periphery of the internal wall of the cylindrical housing (5).

9. Displacement element according to Claim 8, **characterized in that** the grooves (12, 13) are arranged symmetrically on the periphery of the internal wall of the housing (5).

10. Displacement element according to one of the foregoing claims, **characterized in that** the means for damping the movement of the second piston (25) exhibit a sealing ring (36) with a radially peripheral sealing lip (37) facing elastically radially outwards and towards the spring (33), in conjunction with which the overflow connection of the second piston (25) exhibits at least one groove (13) having a small groove depth in relation to the width of the groove, into which the sealing lip (37) is capable of being formed by moulding, and in conjunction with which the overflow connection of the second piston (25) still exhibits at least one further groove (38), into which the sealing lip (37) is not capable of being formed by moulding.

11. Displacement element according to Claim 10, **characterized in that** the further groove (38) exhibits a groove depth which corresponds more or less to the width of the groove.

12. Displacement element according to one of the foregoing claims, **characterized in that** the section (10) of the housing (5), in which the second piston (25) is arranged in such a way as to be capable of displacement, exhibits a larger internal diameter than the section (9) in which the first piston (15) is so arranged as to be capable of displacement.

13. Displacement element according to Claim 12, **characterized in that** the second piston (25) exhibits, on its side facing the first piston (15), tongues (35) facing radially outwards and towards the first piston (15), which are arranged at a distance in relation to one another and extend radially outwards beyond the internal diameter of the section (9) of the first piston (15).

14. Displacement element according to Claim 7, **characterized in that**, in the section (9) which faces towards the open end (11) of the housing (5), the groove (12) exhibits an area (12') having a reducing cross section, and **in that** the area (12') corresponds to the end position of the first piston (15) with the piston rod (8) extended.

## Revendications

1. Elément de déplacement comprenant un boîtier de forme cylindrique rempli d'un fluide sous pression, qui présente deux portions auxquelles est à chaque fois associé un piston disposé de manière déplaçable axialement, les pistons étant adaptés au diamètre intérieur de leur portion respective et divisant la portion respective du boîtier cylindrique en deux espaces de pression, comprenant une tige de piston traversant le boîtier au niveau d'une extrémité ouverte, le premier piston étant disposé à une extrémité de la tige de piston située dans le boîtier et chacun des deux pistons possédant des moyens pour amortir le déplacement de la tige de piston dans une direction respective, **caractérisé en ce que** le premier piston (15), pendant son déplacement dans la portion (10) qui se raccorde à l'extrémité fermée (6) du boîtier (5), peut être entouré par l'écoulement sans grande résistance, et **en ce que** le deuxième piston (25) est disposé du côté du premier piston (15) opposé à la tige de piston (8) et peut être déplacé au moyen du premier piston (15) dans une direction opposée à l'extrémité ouverte (11), un ressort (33) étant disposé du côté du deuxième piston (25) opposé au premier piston (15), lequel ressort s'appuie avec une extrémité contre le deuxième piston (25) et avec l'autre extrémité du côté du boîtier (6, 34).

2. Elément de déplacement selon la revendication 1, **caractérisé en ce que** le ressort est un ressort de compression à boudin (33).

3. Elément de déplacement selon les revendications 1 et 2, **caractérisé en ce que** le deuxième piston (25) possède, sur son côté tourné vers le ressort (33), un logement (32) pour le ressort (33).

4. Elément de déplacement selon l'une quelconque des revendications précédentes, **caractérisé en ce que** le ressort (33) est disposé dans un logement (34) sur son côté opposé au deuxième piston (25).

5. Elément de déplacement selon l'une quelconque des revendications précédentes, **caractérisé en ce que** les moyens pour amortir le déplacement présentent des segments de piston (23, 30) disposés de manière déplaçable axialement.

6. Elément de déplacement selon la revendication 5, **caractérisé en ce que** les segments de piston (23, 30) possèdent une section transversale rectangulaire, ronde ou ovale.

7. Elément de déplacement selon l'une quelconque des revendications précédentes, **caractérisé en ce que** les moyens pour amortir le déplacement présentent une liaison de transfert de trop-plein réalisée sous la forme d'une rainure (12, 13, 38) réalisée sur la paroi intérieure du boîtier (5) de forme cylindrique.

8. Elément de déplacement selon la revendication 7, **caractérisé en ce que** la rainure est formée par plusieurs rainures (12, 13) réparties sur la périphérie de la paroi intérieure du boîtier (5) de forme cylindrique.

9. Elément de déplacement selon la revendication 8, **caractérisé en ce que** les rainures (12, 13) sont disposées de manière symétrique sur la périphérie de la paroi intérieure du boîtier (5).

10. Elément de déplacement selon l'une quelconque des revendications précédentes, **caractérisé en ce que** les moyens pour amortir le déplacement du deuxième piston (25) présentent une bague d'étanchéité (36) avec une lèvre d'étanchéité (37) radialement périphérique tournée élastiquement radialement vers l'extérieur et vers le ressort (33), la liaison de transfert de trop-plein du deuxième piston (25) présentant au moins une rainure (13) ayant une moindre profondeur de rainure par rapport à la largeur de rainure, dans laquelle la lèvre d'étanchéité (37) peut être enfoncée, la liaison de transfert de trop-plein du deuxième piston (25) présentant au moins en outre une rainure supplémentaire (38) dans laquelle la lèvre d'étanchéité (37) ne peut pas être enfoncée.

11. Elément de déplacement selon la revendication 10, **caractérisé en ce que** la rainure supplémentaire (38) présente une profondeur de rainure qui correspond approximativement à la largeur de rainure.

12. Elément de déplacement selon l'une quelconque des revendications précédentes, **caractérisé en ce que** la portion (10) du boîtier (5), dans laquelle le deuxième piston (25) est disposé de manière déplaçable, présente un plus grand diamètre intérieur que la portion (9) dans laquelle le premier piston (15) est disposé de manière déplaçable.

13. Elément de déplacement selon la revendication 12, **caractérisé en ce que** le deuxième piston (25) présente sur son côté tourné vers le premier piston (15) des langues (35) tournées radialement vers l'extérieur et vers le premier piston (15), qui sont disposées à distance les unes des autres et qui s'étendent radialement vers l'extérieur plus loin que le diamètre intérieur de la portion (9) du premier piston (15).

14. Elément de déplacement selon la revendication 7, **caractérisé en ce que** dans la portion (9), qui est tournée vers l'extrémité ouverte (11) du boîtier (5), la rainure (12) présente une région (12') de section transversale se rétrécissant, et **en ce que** la région (12') correspond à la position de fin de course du premier piston (15) lorsque la tige de piston (8) est sortie.
